# EUROPEAN PATENT SPECIFICATION

(11) **EP 0 421 612 B1**
(45) Date of publication and mention of the grant of the patent: **25.01.1995**
(21) Application number: 90309785.5
(22) Date of filing: 06.09.1990
(51) Int. Cl.: C08L 101/00

(54) **Method for improving electric conductivity of a resin moulding**
Verfahren zur Verbesserung der elektrischen Leitfähigkeit eines Kunststoffgegenstandes
Procédé pour améliorer la conductivité électrique d'un objet moulé en résine synthétique

(30) Priority: 11.09.1989 JP 235950/89
(43) Date of publication of application: 10.04.1991
(73) Proprietor: DAI-ICHI KOGYO SEIYAKU CO., LTD., Shimogyo-ku Kyoto (JP)
(72) Inventor: Motogami, Kenji, Takatsuki-shi, Osaka (JP); Mori, Shigeo, Nishikyo-ku, Kyoto (JP)
(74) Representative: Seaborn, George Stephen

(56) References cited:
- DE-A- 3 317 761
- FR-A- 2 568 574
- GB-A- 2 118 763
- US-A- 4 359 411
- US-A- 4 654 279

## Description

### Background of the Invention

This invention relates to a method of producing a resin moulding having improved conductivity.

Conventional methods for improving electric conductivity of a resin moulding comprise milling a conductive substance, specifically carbon black, carbon fibre or conductive mica, in the resin.

However, in the conventional methods for improving electric conductivity, it is necessary, in order to substantially increase the electric conductivity, to mix a large amount of the conductive substance with the resin. The conductive substance tends to affect adversely the physical properties of the resultant resin moulding and further the resin is discoloured so that the moulding produced may, for example, be black. Accordingly there are difficulties which are encountered in practical use of the conventional methods.

An object of the present invention is to provide a method of producing a method of producing a resin moulding having improved electric conductivity and wherein the above-described problems or difficulties we overcome or mitigated, that is the physical properties of the resin moulding are not adversely affected and the moulding is not discoloured.

### Summary of the Invention

In accordance with the present invention there is provided a method of producing a resin moulding, in which a complex of a polyether with an electrolyte salt soluble in said polyether is mixed with a resin and the mixture is moulded,
said polyether having a molecular weight of 1,000 to 100,000 and being selected from polymers of alkylene oxides having no fewer than 4 carbon atoms per molecule and block or random alkylene oxide copolymers containing not less than 10 weight % of alkylene oxide units having no fewer than 4 carbons atoms, and
said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

### Detailed Description of the Invention

The resin used in the method according to the invention may be any resin having a high surface resistance, such as a polyolefin resin, e.g. a resin selected from polyethylene and polypropylene, ABS resin, acrylic resin, polyamide resin, polyvinyl chloride resin, polycarbonate resin, polyacetal resin and phenolic resins.

Further, the polyether of the complex used in the method according to the invention may be any polyether selected from alkylene oxide polymers and copolymers as referred to above. Polymers of an alkylene oxide having no fewer than 4 carbon atoms per molecule and block or random alkylene oxide copolymers containing not less than 10 weight % of alkylene oxide units having no fewer than 4 carbon atoms are used.

In general, it is preferred that the polyether is prepared by carrying out a polymerization reaction using one of the following active hydrogen compounds as starting material : monoalcohols, e.g. methanol and ethanol; dialcohols, e.g. ethylene glycol, propylene glycol and 1,4-butanediol; polyhydric alcohols, e.g. glycerol, trimethylol propane, sorbitol, sucrose and polyglycerol; amine compounds, e.g. monethanolamine, ethylenediamine, diethylenetriamine, 2-ethylhexylamine and hexamethylene diamine; and phenolic active hydrogen-containing compounds, e.g. bisphenol-A and hydroquinone. It is especially preferred to use alcohols as the starting material.

The alkylene oxides having no fewer than 4 carbon atoms per molecule are preferably selected from α-olefine oxides having 4 to 9 carbon atoms, e.g., 1,2-epoxybutane, 1,2-epoxypentane, 1,2-epolyhexane, 1,2-epoxyheptane, 1,2-epoxyoctane, 1,2-epoxynonane and the like; α-olefine oxides having no fewer than 10 carbon atoms per molecule; and styrene oxide and the like. It is especially preferred to use an α-olefine oxides having 4 to 20 carbon atoms per molecule.

The polyethers may be either homopolymers or block or random copolymers. The sequence of the above alkylene oxides in the polyethers is not particularly limited. However, preferably the block or random copolymers are of at least one alkylene oxide having no fewer than 4 carbon atoms per molecule and ethylene oxide and/or propylene oxide. Further, block or random copolymers of at least one alkylene oxide having no fewer than 6 carbon atoms per molecule and ethylene oxide and/or propylene oxide are most preferable. It is necessary that the block or random copolymers contain not less than 10 weight %, more preferably not less than 50 weight %, of alkylene oxide units having no fewer than 4 carbon atoms. As mentioned above the alkylene oxide units may be all of the same formula.

The molecular weight of the polyether is 1,000 to 100,000. The end of the polymer may be terminated with an alkyl group such as a methyl group or an ethyl group.

The soluble electrolyte salt used to produce a complex with the polyether is selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and ortanic phosphates. The added amount of the electrolyte salt is preferably 0.5 to 10 weight % based on the polyether.

The used amount of the complex of the polyether and the soluble electrolyte salt is preferably 1 to 30 weight %, more preferably 1 to 10 weight % based on the resin. Though an addition of not less than 10 weight % of it improves electric conductivity, it causes disadvantage deterioration of physical properties and surface bleeding due to the poor compatibility of the salt with the resin.

For forming the complex between the polyether and the soluble electrolyte salt, a method is preferred in which firstly the soluble electrolyte salt is dissolved in a single or mixed solvent highly compatible with the polyether, such as water, methanol, methyl ethyl ketone, tetrahydrofuran, acetone or methylene chloride, secondly the solution is mixed uniformly with the polyether to give a solution of the complex and thirdly the solvent is removed to give the complex.

For mixing the complex between the polyether and the soluble electrolyte salt with the resin, any commonly used method can be used, such as biaxial extrusion or hot rolling.

For moulding the mixture, any commonly used method can be used, such a injection moulding, extrusion moulding, calendering, compression moulding and SMC process.

In the resin moulding of the present invention, the cation of the soluble electrolyte salt of the complex can move through the ether oxygen in the polyether and hence ionic conductivity is formed in the resin to lower its resistance.

### Preferred Embodiments of the Invention

The following examples serve to illustrate the invention in more detail although the invention is not limited to the examples.

The surface resistivity in the examples was measured as follows: A voltage of 500 V was applied to the test piece with use of an ultra-insulation resistance tester (4329A type manufactured by Yokogawa Hewlett-Packard Company), and then the surface resistivity was measured after 30 seconds.

### Example 1

31 g of ethylene glycol as a starting material was put in a reactor and reacted with 1,000 g of 1,2-epoxyhexane in the presence of 3 g of potassium hydroxide as a catalyst. Then the product was purified by desalting to obtain 838 g of a polyether having a molecular weight of 1,470 (calculated from hydroxyl number) and containing 0.20 ppm of K⁺.

A solution of 25 g of lithium perchlorate in 100 g of methanol was added to 500 g of the polyether with stirring to obtain a homogeneous solution and then methanol comprised in the solution was removed in vacuo to obtain a complex.

70 g of the complex and 1 kg of polypropylene resin were mixed in biaxial extruder at 180 °C for 10 min. and moulded with a hot press method at the same temperature under a pressure of 50 kg/cm² for 2 min. to obtain a test piece (230 mm ×230 mm× 3 mm).

### Example 2

31 g of ethylene glycol was used as a starting material and 4,970 g of a mixture of α-olefine oxide having 6 carbon atoms and α-olefine oxide having 12 carbon atoms (molar ratio 6:4) was reacted with the starting material in the presence of 20 g of potassium hydroxide as a catalyst. Thus obtained product was purified by desalting to obtain 4,120 g of a polyether having a molecular weight of 9,020 (calculated from hydroxyl number) and containing 0.25 ppm of K⁺.

A solution of 25 g of lithium perchlorate in 100 g of methanol was added to 500 g of the polyether with stirring to obtain a homogeneous solution and then methanol comprised in the solution was removed in vacuo to obtain a complex.

50 g of the complex and 1 kg of a polypropylene resin were mixed in a biaxial extruder at 180 °C for 10 min. and moulded with a hot press method at the same temperature under a pressure of 50 kg/cm² for 2 min. to obtain a test piece (230 mm ×230 mm× 3 mm).

### Example 3

31 g of glycerin was put in a reactor as a starting material and reacted with 2,900 g of a ethylene oxide/propylene oxide mixture (molar ratio 8:2) and then reacted with 17,100 g of α-ethylene oxide having 12 carbon atoms. The block polymerization was carried out with use of 100 g of potassium hydroxide. Thus obtained produce was purified by desalting to obtain 18,220 g of a polyether having a molecular weight of 51,190 (calculated from hydroxyl number) and containing 0.29 ppm of K⁺.

A solution of 25 g of potassium thiocyanate in 200 g of acetone was added to 500 g of the polyether with stirring to prepare a homogeneous solution and then acetone was removed in vacuo to obtain a complex.

50 g of the complex and 1 kg of a polypropylene resin were mixed in a biaxial extruder at 180 °C for 10 min. and moulded with a hot press method at the same temperature under a pressure of 50 kg/cm² for 2 min. to obtain a test piece (230 mm ×230 mm× 3 mm).

### Example 4

45 g of 1,4-butanediol was put in a reactor as a starting material. 856 g of ethylene oxide and 2,100 g of 1,2-epoxybutane were successively reacted with the starting material in the presence of 10 g of potassium hydroxide as a catalyst. The reaction product was purified by desalting to obtain 2,650 g of a polyether having a molecular weight of 5,160 (calculated from hydroxyl number) and containing 0.27 ppm of K⁺.

A solution of 25 g of lithium perchlorate in 100 g of methanol was added to 500 g of the polyether with stirring to obtain a homogeneous solution and then methanol comprised in the solution was removed in vacuo to obtain a complex.

30 g of the complex and 1 kg of a polypropylene resin were mixed in a biaxial extruder at 180°C for 10 min. and the product was moulded with a hot press method at the same temperature under a pressure of 50 kg/cm² for 2 min. to obtain a test piece (230 mm ×230 mm×3 mm).

### Comparative Example 1

1 kg of a polypropylene resin was kneaded in a biaxial extruder at at 180°C for 10 min. and the product was moulded with a hot press method at the same temperature under a pressure of 50 kg/cm² for 2 min. to obtain a test piece (230 mm ×230 mm×3 mm).

The surface resistivity and the tensile yield strength of the test pieces obtained in Examples 1 to 4 and Comprative Example 1 were as follows.

| | Surface Resistivity (Ω) | Tensile Yield Strength (Kg/cm²) |
|---|---|---|
| Example 1 | 3.1 × 10¹⁴ | 309 |
| Example 2 | 2.3 × 10¹⁴ | 320 |
| Example 3 | 2.5 × 10¹⁴ | 322 |
| Example 4 | 1.7 × 10¹⁴ | 319 |
| Comparative Example 1 | more than 2 × 10¹⁶ | 330 |

No substantial difference was observed in the other physical properties and appearance between the products prepared in Examples 1 to 4 and Comparative Example 1.

As described above, there can be obtained, according to this invention, a resin moulding having very improved electric conductivity without substantially affecting the color and physical properties of the resin.

## Claims

1. A method of producing a resin moulding, in which a complex of a polyether with an electrolyte salt soluble in said polyether is mixed with a resin and the mixture is moulded,
said polyether having a molecular weight of 1,000 to 100,000 and being selected from polymers of alkylene oxides having no fewer than 4 carbon atoms per molecule and block or random alkylene oxide copolymers containing not less than 10 weight % of alkylene oxide units having no fewer than 4 carbons atoms, and
said electrolyte salt being selected from lithium chloride, lithium bromide, lithium iodide, lithium nitrate, lithium perchlorate, lithium thiocyanate, sodium bromide, sodium iodide, potassium thiocyanate, potassium iodide, lithium sulfonate, organic sulfonates and organic phosphates.

2. A method as defined in Claim 1, wherein said electrolyte salt is used in an amount of 0.5 to 10 weight % based on said polyether.

3. A method as defined in Claim 1 or 2, wherein said complex is used in an amount of 1 to 30 weight % based on said resin.

## Patentansprüche

1. Verfahren zur Herstellung eines Harzformteils, bei welchem ein Komplex aus einem Polyether mit einem in genanntem Polyether löslichen Elektrolytsalz mit einem Harz vermischt und das Gemisch geformt wird,
genannter Polyether ein Molekulargewicht von 1000 bis 100 000 hat und aus Polieren von Alkylenoxiden mit nicht weniger als 4 Kohlenstoffatomen pro Molekül und Block- oder statistisch aufgebauten Alkylenoxid-Copolymeren ausgewählt wird, die nicht weniger als 10 Gew.-% Alkylenoxideinheiten mit nicht weniger als 4 Kohlenstoffatomen enthalten, und
genanntes Elektrolytsalz aus Lithiumchlorid, Lithiumbromid, Lithiumiodid, Lithiumnitrat, Lithiumperchlorat, Lithiumthiocyanat, Natriumbromid, Natriumiodid, Kaliumthiocyanat, Kaliumiodid, Lithiumsulfonat, organischen Sulfonaten und organischen Phosphaten ausgewählt wird.

2. Verfahren nach Anspruch 1, worin genanntes Elektrolytsalz in einer Menge von 0,5 bis 10 Gew.-% bezogen auf genannten Polyether verwendet wird.

3. Verfahren nach Anspruch 1 oder 2, worin genannter Komplex in einer Menge von 1 bis 30 Gew.-% bezogen auf genanntes Harz verwendet wird.

## Revendications

1. Procédé de production d'un article moulé résineux, dans lequel on mélange avec une résine un complexe d'un polyéther avec un sel électrolytique soluble dans ledit polyéther, et on moule le mélange,
ledit polyéther possédant un poids moléculaire de 1.000 à 100.000 et étant choisi parmi des polymères d'oxydes d'alkylènes ne possédant pas moins de 4 atomes de carbone par molécule, et des copolymères séquences ou statistiques d'oxydes d'alkylènes ne contenant pas moins de 10% en poids de motifs d'oxydes d'alkylènes ne possédant pas moins de 4 atomes de carbone, et
ledit sel électrolytique étant choisi parmi le chlorure de lithium, le bromure de lithium, l'iodure de lithium, le nitrate de lithium, le perchlorate de lithium, le thiocyanate de lithium, le bromure de sodium, l'iodure de sodium, le thiocyanate de potassium, l'iodure de potassium, le sulfonate de lithium, des sulfonates organiques et des phosphates organiques.

2. Procédé tel que défini à la revendication 1, dans lequel on utilise ledit sel électrolytique en une quantité de 0,5 à 10% en poids, basée sur ledit polyéther.

3. Procédé tel que défini à la revendication 1 ou 2, dans lequel on utilise ledit complexe en une quantité de 1 à 30% en poids, basée sur ladite résine.
